# EUROPEAN PATENT SPECIFICATION

(11) **EP 1 023 831 B1**
(45) Date of publication and mention of the grant of the patent: **01.10.2003**
(21) Application number: 00610010.1
(22) Date of filing: 26.01.2000
(51) Int. Cl.: A01M 7/00

(54) **A field sprayer with control device**
Landwirtschaftliche Feldspritze mit einer Steuerungseinrichtung
Pulvérisateur agricole avec dispositif de contrôle

(30) Priority: 27.01.1999 DK 10899
(43) Date of publication of application: 02.08.2000
(73) Proprietor: HARDI INTERNATIONAL A/S, 2630 Taastrup (DK)
(72) Inventor: Shahar, Amir, 2791 Dragor (DK)
(74) Representative: Sundien, Thomas

(56) References cited:
- EP-A- 0 623 280
- GB-A- 2 064 826
- US-A- 4 895 303
- US-A- 5 314 120

## Description

The present invention relates to a method of controlling the uniformity of a mixture and a field sprayer of the kind featured in the introductory parts of claims 1 and 6. Conventionally, field sprayers of this kind lend themselves for use in the spraying of active matter, such as a pesticide, a herbicide or an insecticide, across a planted field area with a view to preventing or remedying damage to the crops.

Usually, the recipient on the field sprayer has a capacity of about 1-4 m³, and the user, ie the farmer, will typically spray the active matter in dissolved or diluted form, the active matter in question usually being delivered in highly concentrated form either as powder or liquid in small jars for admixture with water in the recipient immediately prior to use. The active matter can be more or less miscible with the water, or it may have a propensity to precipitate, which has the practical consequence that the concentration of the active matter is higher in one area of the recipient than it is in the remainder of the recipient. Therefore the recipient is often provided with a suitable stirrer means that is to ensure a uniform distribution of the active matter in the recipient to avoid undesired and harmful variations in the quality of the spray liquid discharged from the spraying nozzles, which liquid is usually extracted from the recipient at the bottom thereof. Before the spraying procedure is started, the farmer will usually activate the stirrer in a "dead period" of a duration that is estimated to yield the desired uniform distribution, and the farmer will subsequently allow the stirrer to remain in operation during spraying of the field area in order to continuously ensure this distribution. However, there is no way the farmer can be sure that the stirrer provides the desired uniformity.

The invention aims at improving the prior art field sprayers not merely by ensuring the desired uniform distribution of active matter in the recipient during spraying, but also by reducing the dead period during which the farmer must wait before spraying can be initiated after admixture of the active matter with the water.

According to the invention this is obtained by the features given in the characterising parts of claims 1 and 6, respectively.

The provision, as described in claim 1, of a single sensor that is able to measure the value of a parameter which is representative of the concentration of an active matter in the spray liquid and which is arranged in a well-defined position in the spray liquid, and the transmission of such value to a comparator that compares that value to a value of a desired concentration stored in a memory, enable the provision of a control signal in response to information that the desired uniformity of the spray liquid is accomplished, said comparator being configured eg to emit a visual or an audible signal, or it may be coupled to the stirrer means in order to activate such as soon as a deviation between the measured and the desired values is detected.

As featured in claim 6, the arrangement with more than one sensor provides the particular advantage that the comparator can work on the basis of relative measurements, and thus eliminates the need for calibrating the control device with a view to determining absolute values for the concentration of active matter in various well-defined positions in the spray liquid. This may be particularly advantageous in cases where exact determination of this concentration would usually presuppose an extensive analysis, eg by gas chromatography followed by mass spectroscopy, as is typically the case with indissoluble active matter. If the comparator is also connected to a memory in which a threshold value can be stored, it is also possible for the user to define when the control signal is to be emitted, since it is hereby possible to emit said control signal when the difference between the measured values exceeds the threshold value.

The sensor or sensors can be arranged inside the recipient, but nothing prevents the sensor or sensors from being arranged in the connecting lines from the recipient through which the spray liquid flows during use of the field sprayer. This may permit a simplified access to the individual sensor with a view to replacement or maintenance. Further advantageously, the sensor or one of the sensors can also comprise a float and be adapted for measuring said value in the surface of the spray liquid in the recipient. The current location of the liquid surface thus determines said well-defined position for the sensor. Thus, in case of decreasing liquid level in the recipient, it will hence be possible at any point in time to record a sensor value that expresses the concentration at the top of the liquid mass.

In a convenient embodiment as described in claim 12, the stirrer means may consist of a hydraulic pump that causes the spray liquid to circulate within the recipient, eg via a bottom outlet which is, via a first hose member and the pump, connected to a second hose member having an outlet at the top or at the bottom of the recipient interior. It will in this case, as described in claim 13, particularly advantageously be possible to arrange the additional sensor in connection with the first or the second hose members, since simultaneous configuration of the first sensor as a float will permit, at any time, uncomplicated access to both sensors with a view to repair work, if necessary. In this context it will be understood that recipients of the type conventionally used have relatively small access openings and that consequently it will be difficult in normal conditions to access a sensor permanently arranged in the area neighbouring the recipient bottom.

It will be understood that in all cases the sensors must be arranged at such mutual distance that the value for the measured parameters can in fact represent the concentration in different areas in the liquid, and that the location should be chosen so as to prevent a flow of spray liquid, if any, from passing by two sensors, and thus merely effect measurement of the same liquid mass.

Particularly advantageously the sensors can be arranged for conventionally generating a value for the concentration of the active matter on the basis of the electrical conductivity of the spray liquid in the measurement position.

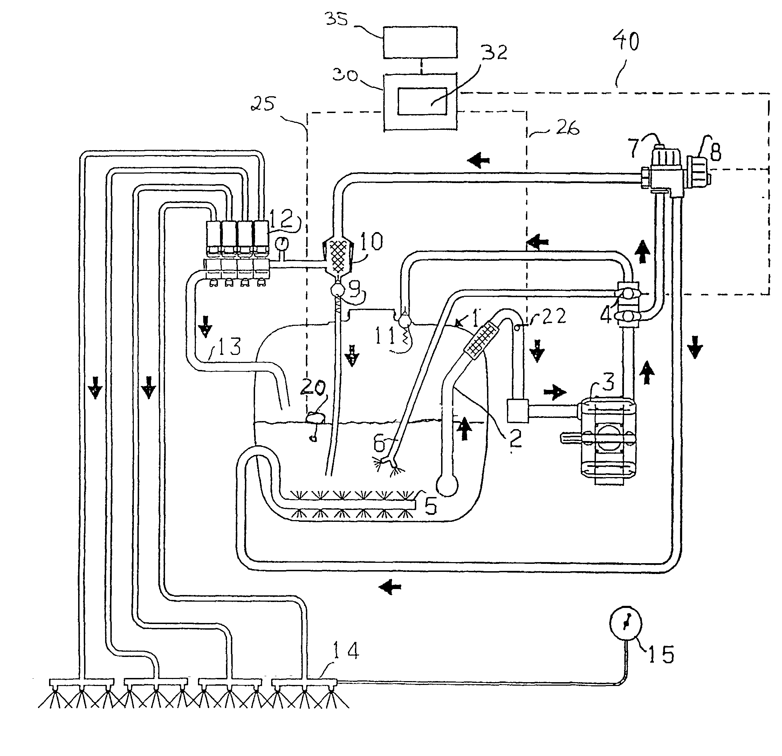

The invention will now be described in further detail with reference to the drawing that shows a preferred embodiment.

In the drawing, a part of a conventional field sprayer is shown, wherein, however, only those components that have relation to the spraying of a spray liquid on a field area are shown. It will be understood that the shown components may eg be arranged either on a frame adapted for suspension or permanently mounted on a tractor or on a separate trailer adapted for being interconnected with a tractor.

In the drawing, the reference numeral 1 is used to designate a conventional recipient for holding a diluted spray liquid. The recipient may have an exemplary volume of about 1-4 m³ and is provided with a not shown supply opening for supplying water and a concentrated active matter, such as a pesticide, a herbicide or an insecticide. Preferably, the active matter is, in its concentrated form, liquid but it may optionally be powderous.

Moreover, in the drawing the reference numeral 14 is used to designate a spray boom with a number of liquid nozzles for spraying the spray liquid across a field area. For this purpose, the field sprayer is provided with a number of connecting lines in the form of hose members that connect the liquid nozzles to the recipient 1 via a manifold 12. The manifold 12 is in flow communication with a pump 3 via a tubular string having a valve 7,8, said pump being in turn connected to a suction pipe 2 that debouches in the recipient 1 at the bottom thereof. During spraying the liquid in the recipient 1 is thus drawn up through the pipe 2 by the pump 3 and is distributed to the individual liquid nozzles by the manifold 12.

Besides, the recipient 1 is, in a conventional manner, provided with safety valves 11 and non-return valves 9 and stirrer means that serve to generate a circulation of the liquid within the recipient 1. As shown, the stirrer means can comprise two tubular strings 5,6 that are both in flow communication with the suction pipe 2 via the pump 3, and which can, by activation of associated valves 4,8, serve to return a large or small portion of the amount of water drawn up through the suction pipe 2 by the pump 3. The tubular strings 5,6 debouch in suitable nozzles whereby a flow can be generated in the recipient 1. It will be understood that opening of the valves 4,8 activates the stirrer means and that the efficiency of the stirring hence depends on the valve position. It is to be stressed that, in the alternative, the stirrer means can be constituted by a mechanical stirrer device with blade wheels or the like that are able to rotate within the recipient 1.

Reference numerals 20 and 22 are used to designate two sensors that were selected to measure the value of a parameter that represents the concentration of the active matter in the portion of the spray liquid where the sensors are located. The sensors can be eg conductivity sensors with two electrodes, or eg light spectroscopy sensors can be used that measure the light absorption in the liquid, which is particularly relevant in case of electrically non-conductive liquids. Further options include pH-sensors or ultrasound sensors.

The one sensor 20 is, as shown, connected to a float and is consequently able to permanently measure the value of the relevant parameter in a portion of the liquid within the recipient 1 immediately at the liquid surface. The sensor 22 is arranged inside the suction pipe 2, preferably in a position above the maximal liquid level in the recipient 1, and will thus, during flow of the liquid through the suction pipe 2, be able to measure values for the parameter in question that represents the concentration of the active matter in the portion of the spray liquid which is located at the recipient 1 bottom where the suction pipe 2 debouches. Alternatively, the sensor 22 can be integral with the recipient interior at the bottom thereof, eg in such a manner that it can be removed with a view to repair via an adjacent opening in the recipient, or close to the manifold 12 after the value 7. If desired, the system can be supplemented with more sensors; eg a third sensor can be arranged at the recipient 1 bottom at the lateral wall that is most distant from the outlet of the suction pipe 2 for providing a further measurement result.

Via lines 25,26 the sensors 20,22 transmit information about the measured values to a comparator 30 that can, as shown, be connected to a display 32 that is controlled in accordance with a control signal emitted by the comparator 30. The comparator 30 can conveniently be configured as a microprocessor system that is able to process the signals from the sensors while executing a computer program. Alternatively, the comparator 30 can be configured by use of conventional electronic components. The comparator 30 may also, as shown, be connected to a line 40 to enable it to emit a control signal 40 to regulate the stirrer means, more specifically for controlling the valves 4,8 that regulate the flow of liquid through the tubular strings 5,6 and thus the stirring which is currently effected in the recipient. Alternatively the control signal 40 can serve to control a motor that operates a mechanical stirring device.

In the embodiment shown, the comparator 30 is connected to a memory 35 in which a threshold value can be stored which is decisive for the value of the control signal, ie whether a visual or an audible signal should be shown in the display 32 and/or whether the stirring inside the recipient is to be regulated. Thus, the comparator 30 compares the difference between the measured values from the sensors 20,22 to said stored threshold value. For instance, the value 0 can be assigned to the threshold value by the farmer whereby the control device 30 is thus caused to either emit a signal for as long as there exists a difference in concentration between the liquid in the two measurement areas in the recipient, ie between the liquid in the surface and at the bottom, or when such difference has been eliminated. As mentioned, the signal can be expressed on the display by a visual/audible signal either ending or starting, or the control signal 40 can may be transmitted to the stirrer means in order to effect automatic regulation thereof. Via the display 32 it can be brought to the notice of the farmer that the desired uniformity of the liquid has been obtained and that thus he can initiate spraying at this point. Thus it is possible to perform spraying after the shortest possible dead period.

Besides, the invention presents the further advantage that it reduces the undesired foam formation at the liquid surface that is conventionally observed during usual operation of field sprayers due to too powerful stirring of the liquid in the recipient, since it is now possible to control the valves 4,8 and hence the stirring to accomplish stirring with the smallest possible requirements to intensity.

Additionally, the embodiment shown in claims 1 through 6 can be exercised by use of the plant shown in the drawing, it being possible in that case to omit one of the sensors 20,22 with their associated lines 25,26.

## Claims

1. A method of controlling by means of stirrer means (4, 5,6,8) the uniformity within a recipient (1) of a mixture of water and an active matter that forms a spray liquid which is to be sprayed across an area for crops using an agricultural sprayer that carries the recipient (1), a boom construction (14) with a number of nozzles for discharging the spray liquid and a number of hose members or the like connecting lines for advancing the spray liquid from the recipient (1) to the boom construction (14);
**characterised in**
measuring by means of a sensor (20,22) arranged in a well-defined position in the spray liquid the value of a parameter which is representative of the concentration of the active matter in the spray liquid,
comparing using a comparator (30) connected to said sensor (20,22) said measured value to a desired value of said parameter which is stored in a memory (35), and
activating said stirrer means (4,5,6,8) in response to a deviation between said measured value and said desired value.

2. A method according to claim 1, **characterised in that** the stirrer means (4,5,6,8) comprise a hydraulic pump (3) arranged for producing a circulation of the spray liquid within the recipient via a first (2) and a second (5,6) hose member coupled to the recipient (1).

3. A method according to claim 1 or 2, **characterised in that** the sensor (20) is arranged inside the recipient (1) .

4. A method according to the preceding claim, **characterised in that** the sensor (20) comprises a float; and that the sensor (20) is adapted for measuring said value in the surface of the spray liquid in the recipient (1).

5. A method according to claim 2, 3 or 4, **characterised in that** the sensor (22) is arranged within said first (2) or second hose member.

6. A field sprayer for spraying a spray liquid onto an area for crops and comprising:
a recipient (1) for containing the spray liquid;
a boom construction (14) featuring a number of nozzles for discharging the spray liquid;
a number of hose members or the like connecting lines for advancing the spray liquid from the recipient (1) to the boom construction (14),
stirrer means (4,5,6,8) for producing stirring of the spray liquid in the recipient (1),
**characterised in that** the field sprayer also comprises:
a first sensor (20) that is able to measure the value of a parameter which is representative of the concentration of an active matter in the spray liquid, and which is arranged in a first well-defined position in the spray liquid;
a second sensor (22) that is able to measure the value of said parameter, and which is arranged in a second well-defined position in the spray liquid;
a comparator (30) connected to the first sensor (20), to the second sensor (22), and adapted for comparing said measured values in said well-defined positions, and for emitting a control signal (32,40) in case said values deviate from each other or equal each other.

7. A field sprayer according to the preceding claim, **characterised in**
**that** the comparator (30) comprises a memory (35) adapted for storing a threshold value, and
**that** the comparator (30) is adapted for emitting said control signal (32,40) in case the difference between said values deviate from the stored threshold value, or equals same.

8. A field sprayer according to one of the preceding claims 6 or 7, **characterised in that** the comparator (30) is also connected to the stirrer means (4,5,6,8); and that the signal (40) is adapted for controlling the stirrer means (4,5,6,8).

9. A field sprayer according to claim 6, 7 or 8, **characterised in that** the first (20) and the second (22) sensors are arranged in respective, fixed height levels relative to the recipient (1).

10. A field sprayer according to claim 6, 7 or 8, **characterised in that** the first sensor (20) comprises a float; and that the first sensor (20) is adapted for measuring said value in the surface of the spray liquid within the recipient (1).

11. A field sprayer according to one of the preceding claims 6 through 10, **characterised in that** the stirrer means (4,5,6,8) comprise a hydraulic pump (3) adapted for producing a circulation of the spray liquid in the recipient (1) via a first (2) and a second (5,6) hose member coupled to the recipient (1).

12. A field sprayer according to the preceding claim, **characterised in that** the second sensor (22) is arranged in said first (2) or second (5,6) hose member.

13. A field sprayer according to any one of claims 7 through 12, **characterised in that**
a third sensor is arranged for measuring the value of said parameter in a third well-defined position;
**that** the memory (30) is adapted for storing a further threshold value; and
**that** the comparator (35) is also connected to the third sensor and adapted for comparing the measured value in said third position to the value measured in the second position, and for emitting a control signal in case the said values deviate from each other or equal each other.

14. A field sprayer according to the preceding claim, **characterised in that** said signal is adapted for controlling the stirrer means (4,5,6,8).

15. A field sprayer according to any one of preceding claims 6 through 14, **characterised in that** the stirrer means comprise a rotating stirrer device.

16. A field sprayer according to any one of preceding claims 6 through 15, **characterised in that** said parameter that is representative of the concentration of active matter in the spray liquid expresses the electrical conductivity of the spray liquid.

17. A field sprayer according to any one of preceding claims 6 through 16, **characterised in that** the spray liquid contains a water-soluble or water-insoluble active matter and water.

## Patentansprüche

1. Verfahren zum Steuern mittels einer Rühreinrichtung (4, 5, 6, 8) der Einheitlichkeit innerhalb einer Behältervorrichtung (1) einer Mischung von Wasser und eines Aktivstoffs, die eine Sprühflüssigkeit ausbildet, die über eine Fläche für einen Bestand unter Verwendung einer landwirtschaftlichen Sprühvorrichtung zu versprühen ist, die die Behältervorrichtung (1), eine Auslegerkonstruktion (14) mit einer Anzahl von Düsen zum Ausstoßen der Sprühflüssigkeit und eine Anzahl von Schlauchelementen oder ähnlichem trägt, die Leitungen zum Vortreiben der Sprühflüssigkeit von der Behältervorrichtung (1) zu der Auslegerkonstruktion (14) verbinden;
**gekennzeichnet durch**
Messen mittels eines Sensors (20, 22), der an einer genau definierten Position in der Sprühflüssigkeit angeordnet ist, des Werts eines Parameters, der für die Konzentration eines Aktivstoffs in der Sprühflüssigkeit repräsentativ ist, Vergleichen unter Verwendung einer Vergleichseinrichtung (30), die mit dem Sensor (20, 22) verbunden ist, des gemessenen Werts mit einem gewünschten Wert des Parameters, der in einem Speicher (35) gespeichert ist, und
Aktivieren der Rühreinrichtung (4, 5, 6, 8) im Ansprechen auf eine Abweichung zwischen dem gemessenen Wert und dem gewünschten Wert.

2. Verfahren gemäß Anspruch 1, **dadurch gekennzeichnet, dass** die Ruhreinrichtung (4, 5, 6, 8) eine Hydraulikpumpe (3) aufweist, die zum Erzeugen einer Zirkulation der Sprühflüssigkeit innerhalb der Behältervorrichtung über ein erstes (2) und ein zweites (5, 6) Schlauchelement angeordnet ist, die mit der Behältervorrichtung (1) gekoppelt sind.

3. Verfahren gemäß Anspruch 1 oder 2, **dadurch gekennzeichnet, dass** der Sensor (20) innerhalb der Behältervorrichtung (1) angeordnet ist.

4. Verfahren gemäß dem vorangehenden Anspruch, **dadurch gekennzeichnet, dass** der Sensor (20) einen Schwimmer aufweist, und dass der Sensor (20) zum Messen des Werts an der Oberfläche der Sprühflüssigkeit in der Behältervorrichtung (1) geeignet ist.

5. Verfahren gemäß Anspruch 2, 3 oder 4, **dadurch gekennzeichnet, dass** der Sensor (22) innerhalb des ersten (2) oder des zweiten Schlauchelements angeordnet ist.

6. Feldsprühvorrichtung zum Versprühen einer Sprühflüssigkeit auf eine Fläche für einen Bestand und mit folgendem:
einer Behältervorrichtung (1) zum Aufnehmen der Sprühflüssigkeit;
einer Auslegerkonstruktion (14), die eine Anzahl von Düsen zum Ausstoßen der Sprühflüssigkeit definiert;
einer Anzahl von Schlauchelementen oder ähnlichem, die Leitungen zum Vortreiben der Sprühflüssigkeit von der Behältervorrichtung (1) zu der Auslegerkonstruktion (14) verbinden,
einer Rühreinrichtung (4, 5, 6, 8) zum Erzeugen eines Rührens der Sprühflüssigkeit in der Behältervorrichtung (1),
**dadurch gekennzeichnet, dass**
die Feldsprühvorrichtung ebenso folgendes aufweist:
einen ersten Sensor (20), der in der Lage ist, den Wert eines Parameters zu messen, der für die Konzentration eines Aktivstoffs in der Sprühflüssigkeit repräsentativ ist, und der an einer ersten genau definierten Position in der Sprühflüssigkeit angeordnet ist;
einen zweiten Sensor (22), der in der Lage ist, den Wert des Parameters zu messen, und der an einer zweiten genau definierten Position in der Sprühflüssigkeit angeordnet ist;
eine Vergleichseinrichtung (30), die mit dem ersten Sensor (20), dem zweiten Sensor (22) verbunden ist und zum Vergleichen der gemessenen Werte an den genau definierten Positionen geeignet ist, und zum Abgeben eines Steuerungssignals (32, 40) für den Fall, dass die Werte voneinander abweichen oder zueinander gleich sind.

7. Feldsprühvorrichtung gemäß dem vorangehenden Anspruch, **dadurch gekennzeichnet, dass**
die Vergleichseinrichtung (30) einen Speicher (35) aufweist, der zum Speichern eines Grenzwertes geeignet ist, und
wobei die Vergleichseinrichtung (30) zum Abgeben des Steuerungssignals (32, 40) für den Fall geeignet ist, dass die Differenz zwischen den Werten von dem gespeicherten Grenzwert abweicht oder gleich diesem ist.

8. Feldsprühvorrichtung gemäß einem der vorangehenden Ansprüche 6 oder 7, **dadurch gekennzeichnet, dass** die Vergleichseinrichtung (30) ebenso mit der Rühreinrichtung (4, 5, 6, 8) verbunden ist; und
wobel das Signal (40) zum Steuern der Rühreinrichtung (4, 5, 6, 8) geeignet ist.

9. Feldsprühvorrichtung gemäß Anspruch 6, 7 oder 8, **dadurch gekennzeichnet, dass** der erste (20) und der zweite (22) Sensor an jeweiligen feststehenden Höhenniveaus relativ zu der Behältervorrichtung (1) angeordnet sind.

10. Feldsprühvorrichtung gemäß Anspruch 6, 7 oder 8, **dadurch gekennzeichnet, dass** der erste Sensor (20) einen Schwimmer aufweist; und
wobei der erste Sensor (20) zum Messen des Werts an der Oberfläche der Sprühflüssigkeit innerhalb der Behältervorrichtung (1) geeignet ist.

11. Feldsprühvorrichtung gemäß einem der vorangehenden Ansprüche 6 bis 10, **dadurch gekennzeichnet, dass** die Rühreinrichtung (4, 5, 6, 8) eine Hydraulikpumpe (3) aufweist, die zum Erzeugen einer Zirkulation der Sprühflüssigkeit in der Behältervorrichtung (1) über ein erstes (2) und ein zweites (5, 6) Schlauchelement geeignet ist, die mit der Behältervorrichtung (1) gekoppelt sind.

12. Feldsprühvorrichtung gemäß dem vorangehenden Anspruch, **dadurch gekennzeichnet, dass** der zweite Sensor (22) an dem ersten (2) oder dem zweiten (5, 6) Schlauchelement angeordnet ist.

13. Feldsprühvorrichtung gemäß einem der Ansprüche 7 bis 12,
**dadurch gekennzeichnet, dass**
ein dritter Sensor zum Messen des Werts des Parameters an einer dritten, genau definierten Position angeordnet ist;
wobei der Speicher (30) zum Speichern eines weiteren Grenzwerts geeignet ist; und
wobei die Vergleichseinrichtung (35) ebenso mit dem dritten Sensor verbunden ist und zum Vergleichen des gemessenen Werts an der dritten Position mit dem Wert, der an der zweiten Position gemessen wird, und zum Abgeben eines Steuerungssignals für den Fall geeignet ist, dass die Werte voneinander abweichen oder zueinander gleich sind.

14. Feldsprühvorrichtung gemäß dem vorangehenden Anspruch, **dadurch gekennzeichnet, dass** das Signal geeignet ist, die -Rühreinrichtung (4, 5, 6, 8) zu steuern.

15. Feldsprühvorrichtung gemäß einem der vorangehenden Ansprüche 6 bis 14, **dadurch gekennzeichnet, dass** die Rühreinrichtung eine Rotationsrührvorrichtung aufweist.

16. Feldsprühvorrichtung gemäß einem der vorangehenden Ansprüche 6 bis 15, **dadurch gekennzeichnet, dass** der Parameter, der für die Konzentration des Aktivstoffs in der Sprühflüssigkeit repräsentativ ist, die elektrische Leitfähigkeit der Sprühflüssigkeit wiedergibt.

17. Feldsprühvorrichtung gemäß einem der vorangehenden Ansprüche 6 bis 16, **dadurch gekennzeichnet, dass** die Sprühflüssigkeit einen wasserlöslichen oder wasserunlöslichen Aktivstoff sowie Wasser enthält.

## Revendications

1. Procédé de contrôle, à l'aide de moyens agitateurs (4, 5, 6, 8), de l'uniformité à l'intérieur d'un récipient (1) contenant un mélange d'eau et de matière active qui forme un liquide à pulvériser qui doit être pulvérisé sur une zone cultivée en utilisant un pulvérisateur agricole qui transporte le récipient (1), une construction formant rampe de pulvérisation (14) avec un certain nombre de buses pour décharger le liquide à pulvériser et un certain nombre d'éléments formant tuyaux ou de conduits de raccordement analogues pour faire cheminer le liquide à pulvériser depuis le récipient (1) jusqu'à la construction formant rampe de pulvérisation (14) ; **caractérisé par** :
la mesure, au moyen d'un capteur (20, 22) agencé dans une position bien définie dans le liquide à pulvériser, de la valeur d'un paramètre qui est représentatif de la concentration de la matière active dans le liquide à pulvériser,
la comparaison, en utilisant un comparateur (30) relié audit capteur (20, 22), de ladite valeur mesurée à une valeur souhaitée dudit paramètre qui est stocké dans une mémoire (35), et
l'activation desdits moyens agitateurs (4, 5, 6, 8) en réponse à un écart entre ladite valeur mesurée et ladite valeur souhaitée.

2. Procédé selon la revendication 1, **caractérisé en ce que** les moyens agitateurs (4, 5, 6, 8) comprennent une pompe hydraulique (3) agencée pour produire une circulation du liquide à pulvériser à l'intérieur du récipient par l'intermédiaire d'un premier (2) et d'un second (5, 6) élément formant tuyau couplé au récipient (1).

3. Procédé selon la revendication 1 ou 2, **caractérisé en ce que** le capteur (20) est agencé à l'intérieur du récipient (1).

4. Procédé selon la revendication précédente, **caractérisé en ce que** le capteur (20) comprend un flotteur ; et **en ce que** le capteur (20) est adapté pour mesurer ladite valeur à la surface du liquide à pulvériser dans le récipient (1).

5. Procédé selon la revendication 2, 3 ou 4, **caractérisé en ce que** le capteur (22) est agencé à l'intérieur dudit premier (2) ou second élément formant tuyau.

6. Pulvérisateur agricole destiné à pulvériser un liquide à pulvériser sur une zone cultivée et comprenant :
un récipient (1) pour contenir le liquide de pulvérisation ;
une construction formant rampe de pulvérisation (14) présentant un certain nombre de buses pour décharger le liquide à pulvériser ;
un certain nombre d'éléments formant tuyaux ou de conduits de raccordement analogues pour faire cheminer le liquide à pulvériser du récipient (1) jusqu'à la construction formant rampe de pulvérisation (14),
des moyens agitateurs (4, 5, 6, 8) pour produire l'agitation du liquide à pulvériser dans le récipient (1), **caractérisé en ce que** le pulvérisateur agricole comprend également :
un premier capteur (20) qui est capable de mesurer la valeur d'un paramètre qui est représentatif de la concentration d'une matière active contenue dans le liquide à pulvériser, et qui est agencé dans une première position bien définie dans le liquide à pulvériser ;
un deuxième capteur (22) qui est capable de mesurer la valeur dudit paramètre, et qui est agencé dans une deuxième position bien définie dans le liquide à pulvériser ;
un comparateur (30) relié au premier capteur (20), au deuxième capteur (22) et qui est adapté pour comparer lesdites valeurs mesurées dans lesdites positions bien définies, et pour émettre un signal de contrôle (32, 40) dans le cas où lesdites valeurs s'écartent l'une de l'autre ou lorsqu'elles sont égales.

7. Pulvérisateur agricole selon la revendication précédente, **caractérisé en ce que** le comparateur (30) comprend une mémoire (35) adaptée pour stocker une valeur de seuil, et **en ce que** le comparateur (30) est adapté pour émettre ledit signal de commande (32, 40) dans le cas où la différence entre lesdites valeurs s'écartent de la valeur de seuil stockée, ou lorsqu'elles sont égales.

8. Pulvérisateur agricole selon l'une des revendications précédentes 6 ou 7, **caractérisé en ce que** le comparateur (30) est également relié aux moyens agitateurs (4, 5, 6, 8) ; et **en ce que** le signal (40) est adapté pour contrôler les moyens agitateurs (4, 5, 6, 8).

9. Pulvérisateur agricole selon la revendication 6, 7 ou 8, **caractérisé en ce que** les premier (20) et deuxième (22) capteurs sont agencés à des niveaux de hauteur déterminés respectifs par rapport au récipient (1).

10. Pulvérisateur agricole selon la revendication 6, 7 ou 8, **caractérisé en ce que** le premier capteur (20) comprend un flotteur ; et **en ce que** le premier capteur (20) est adapté pour mesurer ladite valeur à la surface du liquide à pulvériser à l'intérieur du récipient (1).

11. Pulvérisateur agricole selon l'une des revendications 6 à 10, **caractérisé en ce que** les moyens agitateurs (4, 5, 6, 8) comprennent une pompe hydraulique (3) adaptée pour produire une circulation du liquide à pulvériser dans le récipient (1) par l'intermédiaire d'un premier (2) et d'un second (5, 6) élément formant tuyau couplé au récipient (1).

12. Pulvérisateur agricole selon la revendication précédente, **caractérisé en ce que** le deuxième capteur (22) est agencé dans ledit premier (2) ou second (5, 6) élément formant tuyau.

13. Pulvérisateur agricole selon l'une quelconque des revendications 7 à 12, **caractérisé en ce qu'**un troisième capteur est agencé pour mesurer la valeur dudit paramètre dans une troisième position bien définie ; **en ce que** la mémoire (30) est adaptée pour stocker une autre valeur de seuil ; et **en ce que** le comparateur (35) est également raccordé au troisième capteur et adapté pour comparer la valeur mesurée dans ladite troisième position à la valeur mesurée dans la deuxième position, et pour émettre un signal de contrôle dans le cas où lesdites valeurs s'écartent l'une de l'autre ou lorsqu'elles sont égales.

14. Pulvérisateur agricole selon la revendication précédente, **caractérisé en ce que** ledit signal est adapté pour contrôler les moyens agitateurs (4,5,6,8).

15. Pulvérisateur agricole selon l'une quelconque des revendications précédentes 6 à 14, **caractérisé en ce que** les moyens agitateurs comprennent un dispositif agitateur rotatif.

16. Pulvérisateur agricole selon l'une quelconque des revendications précédentes 6 à 15, **caractérisé en ce que** ledit paramètre qui est représentatif de la concentration de matière active dans le liquide à pulvériser exprime la conductivité électrique du liquide à pulvériser.

17. Pulvérisateur agricole selon l'une quelconque des revendications précédentes 6 à 16, **caractérisé en ce que** le liquide à pulvériser contient une matière active hydrosoluble ou non hydrosoluble et de l'eau.
